# EUROPÄISCHE PATENTSCHRIFT

(11) **EP 2 133 192 B1**
(45) Veröffentlichungstag und Bekanntmachung des Hinweises auf die Patenterteilung: **23.03.2016**
(21) Anmeldenummer: 09158342.7
(22) Anmeldetag: 21.04.2009
(51) Int. Cl.: B29C 71/00, C08J 7/12

(54) **Vorrichtung zur Gasexposition**
Gas exposition device
Dispositif d'exposition au gaz

(30) Priorität: 12.06.2008 DE 102008002393
(43) Veröffentlichungstag der Anmeldung: 16.12.2009
(60) Teilanmeldung: 14178747.3
(73) Patentinhaber: ROBERT BOSCH GMBH, 70442 Stuttgart (DE)
(72) Erfinder: Lay, Reiner, 52072, Aachen (DE)

(56) Entgegenhaltungen:
- EP-A1- 0 087 969
- EP-A2- 0 214 635
- EP-A2- 1 325 974
- WO-A1-01/74481
- WO-A1-2008/109325
- BE-A- 661 512
- DE-A1- 2 910 572
- DE-U1- 9 419 413
- FR-A1- 2 463 833

## Beschreibung

### Stand der Technik

Die Erfindung betrifft eine Vorrichtung zur Exposition eines strangförmigen Produkts einem Gas gemäß dem Oberbegriff des Anspruchs 1. Weiterhin betrifft die Erfindung ein Verfahren zur Halogenierung von strangförmigen Elastomerprofilen in einer solchen Vorrichtung.

Um ein Objekt einer gasförmigen Atmosphäre auszusetzen, ist es einerseits möglich, das Objekt in einen Gasstrom einer entsprechenden Zusammensetzung zu bringen. Dies ist jedoch nur möglich, wenn das Gas an die Umgebung abgegeben werden kann. Bei Gasen, die nicht an die Umgebung gelangen dürfen, z.B. bei toxischen Gasen oder umweltschädlichen Gasen, ist es notwendig, einen geschlossenen Raum vorzusehen. Im Allgemeinen wird der Raum mit dem Gas geflutet und das dem Gas auszusetzende Objekt in den Raum positioniert.

Insbesondere bei kontinuierlich ablaufenden Prozessen, z.B. bei Strangerzeugnissen, die einer gasförmigen Atmosphäre einer beliebigen Zusammensetzung ausgesetzt werden sollen, ergibt sich das Problem, dass das Erzeugnis der Kammer zugeführt und aus der Kammer wieder abgeführt werden muss. Am Einlass bzw. Auslass des strangförmigen Objekts muss eine Dichtung vorgesehen sein, die ein Austreten des Gases aus der Kammer verhindert. Da derartige gasundurchlässige Dichtungen jedoch nur schwer zu realisieren sind, werden im Allgemeinen strangförmige Erzeugnisse chargenweise in eine Reaktionskammer eingelegt, die anschließend verschlossen und dann mit dem entsprechenden Gas geflutet wird. Nach der Behandlung wird zunächst das Gas aus der Kammer entfernt, bevor diese wieder geöffnet wird, um das Produkt herauszunehmen.

Diesbezüglich ist aus der WO 01/74481 A1 eine Vorrichtung bekannt zur Exposition eines strangförmigen Produkts einem Gas, umfassend ein Reaktionsraum, in dem das Gas enthalten ist, mit einem Einlass, durch den ein strangförmiges Produkt kontinuierlich dem Reaktionsraum zugeführt wird und einem Auslass, durch den das strangförmige Produkt aus dem Reaktionsraum austritt.

### Offenbarung der Erfindung

### Vorteile der Erfindung

Eine erfindungsgemäße Vorrichtung zur Exposition eines Wischgummiprofils von Scheibenwischern einem Gas umfasst einen Reaktionsraum, in dem das Gas enthalten ist, mit einem Einlass, durch den das Wischgummiprofil kontinuierlich dem Reaktionsraum zugeführt wird und einem Auslass, durch den das Wischgummiprofil aus dem Reaktionsraum austritt. Am Einlass und am Auslass ist jeweils ein mit einer Flüssigkeit gefüllter Syphon ausgebildet, durch das das Wischgummiprofil geführt wird. Dabei enthält der Reaktionsraum ein halogenhaltiges Gas.

Der mit einer Flüssigkeit gefüllte Syphon dichtet das Innere des Reaktionsraums im Bereich des Einlasses und Auslasses des strangförmigen Produkts gegen die Umgebung ab. Hierdurch wird vermieden, dass aus dem Reaktionsraum Gas austreten kann. Gleichzeitig ermöglicht der Syphon einen kontinuierlichen Durchlauf des strangförmigen Produkts durch den Reaktionsraum.

Im Allgemeinen weist eine Flüssigkeit in einem Syphon eine freie Oberfläche zur Umgebung hin auf. An der freien Oberfläche kann Flüssigkeit bis zum Erreichen der Sättigungsgrenze der Flüssigkeit in der Gasatmosphäre verdunsten. Aus diesem Grund kann sich auch Flüssigkeit im Reaktionsraum anreichern, bis die Sättigungsgrenze der Flüssigkeit erreicht ist. Um die verdunstete Flüssigkeit aus dem Gas zu entfernen, ist es bevorzugt, den Reaktionsraum mit einem Gastrockner zu verbinden. Das Gas wird dem Gastrockner zugeführt und in diesem getrocknet. Hierdurch wird im Gas enthaltene Flüssigkeit entfernt.

In einer bevorzugten Ausführungsform ist der Reaktionsraum mit einem Gasumlauf verbunden, durch den das im Reaktionsraum enthaltene Gas umgewälzt wird. Vorteil des Gasumlaufs ist, dass eine gleichmäßige Durchmischung des Gases erfolgt und die Atmosphäre im gesamten Reaktionsraum eine im Wesentlichen konstante Zusammensetzung aufweist.

Wenn mindestens eine Komponente des Gases im Reaktionsraum z.B. durch eine chemische Reaktion mit dem strangförmigen Produkt verbraucht wird, ist es z.B. möglich, eine Vorrichtung zur Analyse der Gaszusammensetzung vorzusehen. Bei einem Gasumlauf ist die Vorrichtung zur Analyse der Gaszusammensetzung vorzugsweise im Gasumlauf angeordnet. Auch der Gastrockner, in dem Feuchtigkeit aus dem Gas entfernt werden kann, ist vorzugsweise im Gasumlauf angeordnet. Auf diese Weise erfolgt im Gasumlauf eine Konditionierung des dem Reaktionsraum zugeführten Gases.

In einer weiteren bevorzugten Ausführungsform ist weiterhin eine Vorrichtung zur Zudosierung von Gas umfasst. Entsprechend dem Gasverbrauch im Reaktionsraum kann auf diese Weise verbrauchtes Gas nachdosiert werden. Zur Nachdosierung kann dem Reaktionsraum entweder Reingas zugeführt werden oder aber ein Gasgemisch, das zwei oder mehr Komponenten des im Reaktionsraum enthaltenen Gases enthält. Wenn ein Gasgemisch zugeführt wird, ist es bevorzugt, dass die mindestens eine Komponente, die z.B. durch die chemische Reaktion verbraucht wird, in einer höheren Konzentration enthalten ist als die Konzentration dieses Gases im Reaktionsraum. Auf diese Weise kann die Konzentration des Gases im Reaktionsraum erhöht werden.

Die Vorrichtung zur Zudosierung von Gas kann entweder mit dem Reaktionsraum oder alternativ mit dem Gasumlauf verbunden sein. Bevorzugt ist die Vorrichtung zur Dosierung von Gas mit dem Gasumlauf verbunden. Die Menge an zuzuführendem Gas kann z.B. durch Analyse der Gaszusammensetzung ermittelt werden.

Im Allgemeinen kann sich Gas aus dem Reaktionsraum in der Flüssigkeit, die im Syphon enthalten ist, lösen. Hierdurch reichert sich Gas in der Flüssigkeit an. Da die Flüssigkeit auch auf der dem Reaktionsraum abgewandten Seite eine freie Oberfläche aufweist, mit der diese in Kontakt zur Umgebung steht, kann auch auf der dem Reaktionsraum abgewandten Seite Flüssigkeit aus dem Syphon verdunsten. Wenn sich in der Flüssigkeit Gas gelöst hat, so tritt mit der verdunstenden Flüssigkeit ebenfalls Gas an die Atmosphäre aus. Um zu vermeiden, dass dieses Gas in die Umgebung gelangt, ist es bevorzugt, auf der dem Reaktionsraum abgewandten Seite der Syphons am Einlass und am Auslass jeweils eine Absaugung anzuordnen, um verdunstende gashaltige Flüssigkeit aus dem Syphon abzusaugen. Das mit der Absaugung abgesaugte Flüssigkeit enthaltende Gas kann z.B. einer Aufbereitungsvorrichtung zugeführt werden. Alternativ ist es auch möglich, das Gas z.B. einer Gaswäsche zuzuführen, in der unerwünschte Bestandteile aus dem Gas entfernt werden, bevor dieses als Abluft an die Umgebung abgegeben wird. Zur Abgasreinigung können z.B. Wäscher, Filter oder jede beliebige andere Vorrichtung zur Abgasreinigung, die dem Fachmann bekannt ist, eingesetzt werden.

Die Flüssigkeit, die in den Syphons enthalten ist, wird vorzugsweise so ausgewählt, dass diese gegenüber dem im Reaktionsraum enthaltenen Gas inert ist. Eine geeignete Flüssigkeiten, die in den Syphons enthalten ist, ist z.B. Wasser.

Alternativ ist es jedoch auch möglich, dass z.B. Flüssigkeiten eingesetzt werden, die das im Reaktionsraum enthaltene Gas, das sich in der Flüssigkeit löst, binden können, um zu verhindern, dass das Gas aus der Flüssigkeit an die Umgebung durch verdunstende Flüssigkeit austreten kann.

Der Flüssigkeitsstand in den Syphons kann z.B. durch Verdunstung von Flüssigkeit in den Reaktionsraum bzw. an die Umgebung sowie durch Mitreißen von Flüssigkeit mit dem strangförmigen Produkt, welches durch die Flüssigkeit geführt wird, abnehmen. Aus diesem Grund ist es bevorzugt, eine Vorrichtung vorzusehen, mit der die im Syphon enthaltene Flüssigkeit ergänzt werden kann. Hierzu ist es z.B. möglich, einen Vorratsbehälter vorzusehen, der mit den jeweiligen Syphons verbunden ist. Zur Zufuhr von Flüssigkeit kann z.B. in der Verbindung vom Vorratsbehälter in den Syphon eine Pumpe vorgesehen sein. Alternativ ist es jedoch auch möglich, den Flüssigkeitsstand im Vorratsbehälter so zu wählen, dass automatisch Flüssigkeit bis zu einem vorgegebenen Flüssigkeitsstand in den Syphon nachgeführt wird. Auf diese Weise wird der Flüssigkeitsstand im Syphon im Wesentlichen konstant gehalten.

Die Erfindung betrifft weiterhin ein Verfahren zur Halogenierung von strangförmigen Elastomerprofilen in der erfindungsgemäßen Vorrichtung. Hierbei wird das strangförmige Elastomerprofil durch die Flüssigkeit im Syphon am Einlass dem Reaktionsraum zugeführt und durch die Flüssigkeit im Syphon am Auslass aus dem Reaktionsraum abgezogen. Im Reaktionsraum ist ein halogenhaltiges Gas enthalten.

Das strangförmige Elastomerprofil ist z.B. ein Profil, wie es für Wischgummis von Scheibenwischern eingesetzt wird. Durch die Reaktion mit einem Halogen wird das Elastomer des Elastomerprofils gehärtet. Typischerweise eingesetzte Elastomere sind z.B. Naturkautschuk (NR), Chloropen-Kautschuk (CR), Butadien-Kautschuk (BR), Stryrol-Butadien-Kautschuk (SBR), Ethylen-Propylen-Copolymer (EPM), Ethylen-Propylen-Dien-Terpolymer (EPDM), Ethylen-Vinylacetat-Copoylmere (EVM), Acrylnitril-Butadien-Kautschuk (NBR), hydrierter Acrylnitril-Butadien-Kautschuk (HNBR), Polyurethan-Elastomere (PUR) sowie Mischungen aus diesen Materialien.

Besonders bevorzugt ist das Elastomermaterial ausgewählt aus Ethylen-Propylen-Dien-Terpolymer, Naturkautschuk, Chloropren-Kautschuk oder einer Mischung daraus.

Das im Reaktionsraum enthaltene halogenhaltige Gas enthält z.B. Chlor, Fluor oder Brom. Ggf. ist weiterhin Stickstoff enthalten. Der Anteil an Halogen im Gas liegt vorzugsweise im Bereich von 10 bis 100 Vol.-%. Im Reaktionsraum kann nur ein Halogen oder eine Mischung aus zwei oder mehr Halogenen enthalten sein. Wenn eine Mischung aus zwei oder mehr Halogenen enthalten ist, so liegt der Anteil an Chlor vorzugsweise im Bereich von 5 bis 50 Vol.-%, der Anteil an Fluor im Bereich von 1 bis 10 Vol.-% und der Anteil an Brom im Bereich von 5 bis 50 Vol.-%.

Insbesondere, wenn neben Halogen im Gasgemisch auch mindestens ein inertes Gas oder im Gas eine Mischung aus zumindest zwei Halogenen enthalten ist, wird der Halogengehalt des Gases kontinuierlich gemessen und verbrauchtes Halogen durch Zugabe eines halogenhaltigen Gas ergänzt. Auf diese Weise kann die Zusammensetzung des Gasgemisches im Wesentlichen konstant gehalten werden. Neben einem halogenreichen Gas, das zugeführt wird, ist es auch möglich, reines Halogen zuzuführen. Wenn ein halogenreiches Gas ergänzt wird, so enthält dieses lediglich Komponenten, die auch im Gasgemisch, das im Reaktionsraum enthalten ist, enthalten sind.

Der Reaktionsraum wird vorzugsweise von dem halogenhaltigen Gas durchströmt. Um den Reaktionsraum mit dem halogenhaltigen Gas zu durchströmen, ist es bevorzugt, den Reaktionsraum mit einem Gasumlauf zu versehen, durch den das halogenhaltige Gas geführt wird. Hierzu ist im Gasumlauf vorzugsweise ein Gebläse vorgesehen. Der Gasumlauf mündet z.B. mit einer Düse im Reaktionsraum. Hierdurch lässt sich das strangförmige Produkt direkt mit dem Gas anblasen. Alternativ ist es jedoch auch möglich, dass der Gasumlauf an einer beliebigen Position im Reaktionsraum endet und das Gas an dieser Stelle in den Reaktionsraum eintritt. Durch die Durchströmung des Reaktionsraumes mit dem Gas wird gewährleistet, dass die Gaszusammensetzung im Reaktionsraum im Wesentlichen konstant bleibt. Die Zusammensetzung des Gases wird vorzugsweise mit einer Vorrichtung zur Analyse der Gaszusammensetzung kontinuierlich erfasst. Hierbei eignet sich jede beliebige, dem Fachmann bekannte Vorrichtung zur Analyse der Gaszusammensetzung. Geeignete Vorrichtungen, um die Zusammensetzung des Gases zu analysieren, sind z.B. UV/Vis-Spektroskopie oder auch Raman-Spektroskopie.

Weiterhin wird das halogenhaltige Gas vorzugsweise getrocknet. Dies erfolgt z.B. durch einen im Gasumlauf enthaltenen Gastrockner. Die Trocknung kann durch jedes beliebige, dem Fachmann bekannte Verfahren erfolgen. So kann z.B. ein Adsorptionstrockner eingesetzt werden.

Die Trocknung des halogenhaltigen Gases ist erforderlich, um die von dem Elastomerprofil in den Reaktionsraum eingeschleppte Flüssigkeit zu entfernen. Die Entfernung der Flüssigkeit erfolgt z.B. indem diese im Reaktionsraum verdunstet. Eine schnelle Trocknung wird erzielt, indem das Elastomerprofil nach passieren des am Einlass angeordneten Syphons von dem getrockneten halogenhaltigen Gas angeblasen wird.

Um zu vermeiden, dass aus dem Reaktionsraum Gas durch den Syphon am Einlass bzw. am Auslass herausgedrückt wird, ist es erforderlich, dass auf beiden Seiten des Syphons im Wesentlichen gleicher Druck vorliegt. Besonders bevorzugt herrscht im Reaktionsraum Atmosphärendruck. Alternativ ist es möglich, im Reaktionsraum einen Druck bereitzuhalten, der unterhalb des äußeren Drucks, insbesondere unterhalb des Atmosphärendrucks, liegt. Auch diese Weise kann vermieden werden, dass Gas über den Syphon austreten kann. Jedoch kann ein zu großer Druckunterschied dazu führen, dass Gas aus der Umgebung über den Syphon in den Reaktionsraum eindringt.

Durch den Flüssigkeitsstand in den Syphons lässt sich die Zudosierung beziehungsweise Nachdosierung des Gases regeln. Die Differenz des Flüssigkeitsstands der zur Umgebung weisenden Seite des Syphons und der zum Reaktionsraum weisenden Seite des Syphons entspricht jeweils der Differenz des Druckes im Reaktionsraum zum äußeren Atmosphärendruck. Sobald der Flüssigkeitsstand an der zur Umgebung weisenden Seite des Syphons abnimmt und der Flüssigkeitsstand auf der zum Reaktionsraum weisenden Seite des Syphons zunimmt, nimmt der Druck im Reaktionsraum ab, es muss Gas nachgeführt werden.

Insbesondere bei der Halogenierung von strangförmigen Elastomerprofilen, wie sie beispielsweise für Wischgummis von Scheibenwischern eingesetzt werden, ist es bevorzugt, eine schnelle Reaktion des Halogens mit dem Elastomer zu erreichen und so den Reaktionsraum möglichst kurz und kompakt halten zu können. Um dies zu erreichen, ist es bevorzugt, die Halogenierung unmittelbar nach der Vulkanisation des Elastomerprofils durchzuführen. Auf diese Weise wird die im Elastomerprofil noch vorhandene Wärme für eine Beschleunigung der Reaktion bei der Halogenierung genutzt. Hierbei ist jedoch zu berücksichtigen, dass das Elastomerprofil beim Durchlauf durch den Syphon abgekühlt wird. Die Temperatur des Elastomerprofils im Reaktionsraum ist somit niedriger als die Temperatur vor dem Eintritt in die Flüssigkeit des Syphons auf der Einlassseite.

Alternativ ist es auch möglich, mit einem erwärmten Gasgemisch zu arbeiten. Das Gas kann z.B. im Gasumlauf aufgewärmt werden. Hierzu lässt sich z.B. ein Wärmeüberträger verwenden. Alternativ ist es z.B. auch möglich, dass das Gas in der Vorrichtung zum Trocknen des Gases erwärmt wird.

Auch ist es möglich, die in den Syphons enthaltene Flüssigkeit zu beheizen. Hierdurch wird das strangförmige Elastomerprofil weniger stark abgekühlt, woraus insbesondere bei einer Reaktion der Oberfläche des Elastomerprofils mit Chlor ebenfalls ein positiver Effekt auf die Reaktionsgeschwindigkeit resultiert. Ein weiterer Vorteil, der sich aus dem Beheizen der Flüssigkeit ergibt, ist zum Beispiel, dass die Löslichkeit von im Reaktionsraum enthaltenem Halogen, beispielsweise Chlor, gering gehalten wird.

Weiterhin ist es auch möglich, z.B. die Dissoziation des Halogens mit einem kalten Plasma zu unterstützen.

### Kurze Beschreibung der Zeichnung

Eine Ausführungsform der Erfindung ist in der Zeichnung dargestellt und in der nachfolgen- den Beschreibung näher erläutert.

Die einzige Figur zeigt eine schematische Darstellung der erfindungsgemäßen Vorrichtung.

### Ausführungsformen der Erfindung

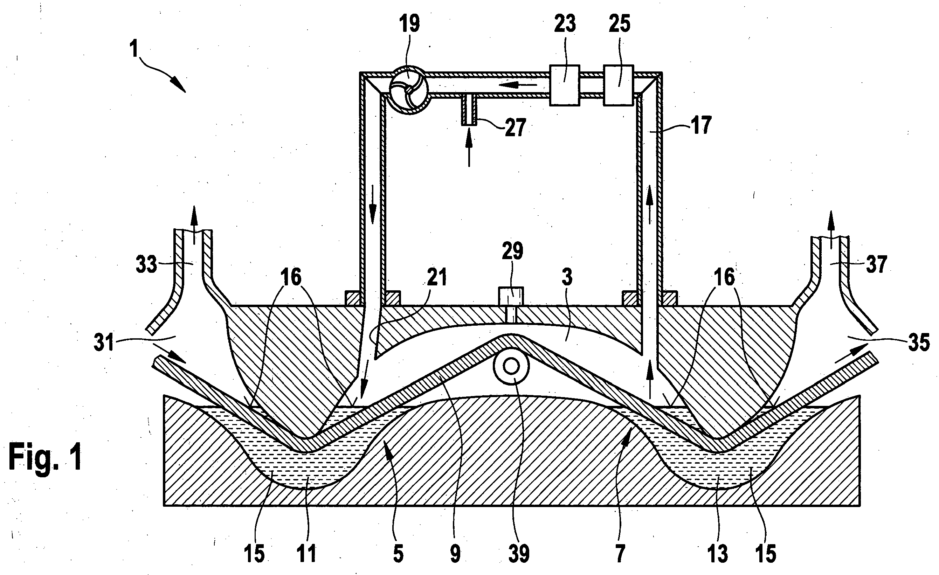

Eine erfindungsgemäß Vorrichtung 1 wie sie in Figur 1 dargestellt ist, umfasst einen Reaktionsraum 3, in dem ein von der umgebenden Atmosphäre verschiedenes Gas oder Gasgemisch enthalten ist. Um im gesamten Reaktionsraum 3 eine gleichmäßige Atmosphäre zu erhalten, ist der Reaktionsraum 3 von dem Gas oder Gasgemisch durchströmt.

Der Reaktionsraum 3 umfasst einen Einlass 5 und einen Auslass 7. Über den Einlass 5 wird dem Reaktionsraum 3 ein strangförmiges Produkt 9 zugeführt. Im Reaktionsraum 3 wird das strangförmige Produkt 9 dem im Reaktionsraum 3 enthaltenen Gas bzw. Gasgemisch ausgesetzt.

Das strangförmige Produkt 9 ist z.B. ein Profil aus einem Elastomermaterial, wie es beispielsweise für Wischgummis von Scheibenwischern eingesetzt wird. Dieses wird zur Härtung des Elastomermaterials im Reaktionsraum 3 halogeniert. Hierzu ist das im Reaktionsraum 3 enthaltene Gas vorzugsweise ein Gasgemisch aus mindestens einem Halogen und ggf. Stickstoff. Als Halogene werden üblicherweise Chlor, Fluor oder Brom oder Mischungen daraus eingesetzt.

Um zu vermeiden, dass Gas aus dem Reaktionsraum 3 austritt, ist im Bereich des Einlasses 5 ein erster Syphon 11 und im Bereich des Auslasses 7 ein zweiter Syphon 13 ausgebildet.

Der erste Syphon 11 und der zweite Syphon 13 sind vorzugsweise in Form eines im Wesentlichen U-förmigen Rohres ausgebildet. Es ist aber auch jede beliebige andere geometrische Form denkbar, die es ermöglicht, den ersten Syphon 11 und den zweiten Syphon 13 so mit einer Flüssigkeit 15 zu befüllen, dass zumindest ein Teilbereich des rohrförmig ausgebildeten Syphons 11, 13 vollständig mit der Flüssigkeit 15 befüllt ist, ohne dass sich oberhalb der Flüssigkeit 15 eine Gasschicht befindet. Als Flüssigkeit, mit der der erste Syphon 11 bzw. zweite Syphon 13 befüllt sind, eignet sich jede beliebige Flüssigkeit 15, die sowohl gegenüber der Umgebung als auch dem im Reaktionsraum 3 enthaltenen Gas inert ist. Weiterhin ist es bevorzugt, schwer flüchtige Flüssigkeiten einzusetzen, um die Verdunstungsmenge der Flüssigkeit 15 gering zu halten. Bevorzugt als Flüssigkeit 15 im ersten Syphon 11 und im zweiten Syphon 13 wird Wasser eingesetzt. Dies hat den Vorteil, dass es günstig ist und in ausreichend großer Menge zur Verfügung steht, um Flüssigkeitsverluste im ersten Syphon 11 und zweiten Syphon 13 kontinuierlich ausgleichen zu können, um einen im Wesentlichen gleichmäßigen Flüssigkeitsstand im ersten Syphon 11 und im zweiten Syphon 13 zu gewährleisten. Flüssigkeitsverluste in den Syphons 11, 13 treten z.B. durch Verdunstung an der Flüssigkeitsoberfläche 16 und durch Mitschleppen von Flüssigkeit 15 am strangförmigen Produkt 9 auf. Durch das strangförmige Produkt 9 wird Flüssigkeit 15 sowohl in den Reaktionsraum 3 über den ersten Syphon 11 am Einlass 5 eingeschleppt als auch aus dem zweiten Syphon 13 beim Verlassen des Reaktionsraums 3 ausgetragen.

Insbesondere, wenn eine Reaktion der Oberfläche des strangförmigen Produkts 9 mit einem im Reaktionsraum 3 enthaltenen Gas erfolgen soll, z.B. bei der Halogenierung eines Elastomerprofils, ist es notwendig, das strangförmige Produkt 9 nach dem Durchlaufen des ersten Syphons 11 zu trocknen, damit ein gleichmäßiger Kontakt der Oberfläche des strangförmigen Produkts 9 mit dem im Reaktionsraum 3 enthaltenen Gas erfolgen kann. Eine schnelle Trocknung wird z.B. dadurch erreicht, dass das strangförmige Produkt 9 nach dem Durchlaufen des ersten Syphons 11 angeblasen wird. Dies erfolgt vorzugsweise mit dem im Reaktionsraum 3 enthaltenen Gas. Um den Druck im Reaktionsraum 3 konstant zu halten und das strangförmige Produkt 9 gleichmäßig mit dem Gas anblasen zu können, ist es bevorzugt, einen Gasumlauf 17 vorzusehen. Der Gasumlauf 17 zweigt vorzugsweise an einer Position in der Nähe des Auslasses 7 aus dem Reaktionsraum 3 ab. An dieser Position wird Gas aus dem Reaktionsraum 3 in den Gasumlauf 17 angesaugt. Hierzu ist im Gasumlauf 17 ein Gebläse 19 enthalten, durch das die Gasströmung im Gasumlauf 17 aufrechterhalten wird. Im Bereich des Einlasses 5 für das strangförmige Produkt 9 mündet der Gasumlauf 17 im Reaktionsraum 3. Um das strangförmige Produkt 9 mit dem durch den Gasumlauf 17 strömenden Gas anzublasen, ist der Mündungsbereich 21 des Gasumlaufs 17 z.B. in Form einer Düse ausgebildet. Hierbei eignet sich jede beliebige, dem Fachmann bekannte Düse. Es ist aber auch möglich, den Mündungsbereich 21 als Rohrende des Gasumlaufs 17 zu gestalten. Die Ausbildung als Düse ist nicht unbedingt erforderlich. Vorteil einer Düse ist jedoch, dass eine höhere Gasgeschwindigkeit erreicht wird und damit ein besseres Anblasen des strangförmigen Produkts 9 ermöglicht wird.

Durch das Trocknen des strangförmigen Produkts 9 wird das im Reaktionsraum 3 enthaltene Gas befeuchtet. Zudem verdunstet ein Teil der Flüssigkeit an der Flüssigkeitsoberfläche 16, wodurch ebenfalls die Feuchte des im Reaktionsraum 3 enthaltenen Gases erhöht wird. Die so vom Gas aufgenommene Flüssigkeit muss wieder aus dem Gas entfernt werden. Hierzu ist vorzugsweise im Gasumlauf 17 eine Vorrichtung zu Gastrocknung 23 aufgenommen. Als Vorrichtung zur Gastrocknung 23 eignet sich jede beliebige, dem Fachmann bekannte Vorrichtung. So kann als Vorrichtung zur Gastrocknung 23 z.B. ein Adsorptionstrockner oder ein Absorptionstrockner eingesetzt werden.

Insbesondere bei der Halogenierung von Elastomerprofilen wird Halogen aus dem im Reaktionsraum 3 enthaltenen Gas verbraucht. Um eine gleichmäßige Halogenierung zu gewährleisten, ist es jedoch erforderlich, eine im Wesentlichen gleich bleibende Zusammensetzung des Gases im Reaktionsraum 3 bereitzustellen. Hierzu ist im Gasumlauf 17 eine Vorrichtung 25 zur Analyse der Gaszusammensetzung enthalten. Zur Analyse der Gaszusammensetzung eignen sich z.B. UV/Vis-Spektroskopie oder auch Raman-Spektroskopie.

Mit der Vorrichtung 25 zur Analyse der Gaszusammensetzung erfolgt vorzugsweise eine kontinuierliche Messung der Zusammensetzung des im Reaktionsraum 3 bzw. des durch den Gasumlauf 17 strömenden Gases. Entsprechend der Gaszusammensetzung wird dem Gasumlauf 17 oder dem Reaktionsraum 3 frisches Gas zugeführt. Wenn die Vorrichtung 1 zur Halogenierung eines Elastomerprofils eingesetzt wird, so wird als frisches Gas ein halogenreiches Gasgemisch zugeführt. Das halogenreiche Gasgemisch enthält dabei lediglich die Bestandteile, die auch im Gasgemisch im Reaktionsraum 3 enthalten sind. Jedoch ist der Anteil des verbrauchten Halogens im zugeführten Frischgas höher als der Anteil des Halogens im Reaktionsraum 3. Die Menge des zugeführten Frischgases wird dabei so gewählt, dass eine konstante Zusammensetzung des Gases im Reaktionsraum erzielt wird. Die Zufuhr des Frischgases erfolgt z.B. über einen Zulauf 27 im Gasumlauf 17 oder alternativ über einen in der Figur nicht dargestellten Zulauf direkt in den Reaktionsraum 3. Bevorzugt ist jedoch der Zulauf 27 am Gasumlauf 17 angeordnet.

Um zu vermeiden, dass Gas aus dem Reaktionsraum 3 über die Syphons 11, 13 herausgedrückt wird, entspricht der Druck im Reaktionsraum 3 vorzugsweise Atmosphärendruck. Hierzu ist am Reaktionsraum 3 eine Druckregelung vorgesehen. Diese umfasst beispielsweise ein Überdruckventil 29, welches öffnet, sobald der Druck im Reaktionsraum 3 den vorgegebenen Druck übersteigt. Es ist aber auch jede beliebige andere, dem Fachmann bekannte Druckregelung möglich, mit der der Druck im Reaktionsraum 3 konstant gehalten werden kann.

Um zu vermeiden, dass Gas aus dem Reaktionsraum 3 an die Umgebung austreten kann, ist es weiterhin erforderlich, den Flüssigkeitsstand in den Syphons 11, 13 im Wesentlichen konstant zu halten. Insbesondere ist darauf zu achten, dass ein Teilbereich des Syphons 11, 13 immer vollständig mit Flüssigkeit befüllt ist, ohne dass sich eine Gasschicht oberhalb der Flüssigkeit ausbildet. Ein ständiger Flüssigkeitsverlust in den Syphons 11, 13 entsteht zum einen durch Verdunstung an den Flüssigkeitsoberflächen 16 als auch durch Mitschleppen von Flüssigkeit mit dem strangförmigen Produkt 9. Dieser Flüssigkeitsverlust muss ausgeglichen werden. Dies kann z.B. dadurch erfolgen, dass die Syphons 11, 13 mit einem Vorratsbehälter verbunden sind, in dem Flüssigkeit vorgehalten wird. Über den Vorratsbehälter lässt sich der Flüssigkeitsstand in den Syphons 11, 13 automatisch regeln. So können die Syphons 11, 13 z.B. eine Flüssigkeitsstandüberwachung umfassen und sobald ein minimaler Flüssigkeitsstand erreicht wird, wird Flüssigkeit nachgeführt.

Da sich im Allgemeinen auch Gas in der Flüssigkeit löst, wird sich Gas aus dem Reaktionsraum 3 bis zum Erreichen der Sättigungsgrenze in der Flüssigkeit 15 in den Syphons 11, 13 lösen. Bei der Verdunstung über die Flüssigkeitsoberfläche 16 geht somit auch Gas in die Atmosphäre. Um zu vermeiden, dass das Gas an die Umgebung abgegeben wird, ist vorzugsweise im Bereich des Zulaufs 31 zum ersten Syphon 11 ein erster Abzug 33 und im Bereich des Ablaufs 35 aus dem zweiten Syphon 13 ein zweiter Abzug 37 angeordnet. Der erste Abzug 33 und der zweite Abzug 37 sind vorzugsweise mit einer Abgasreinigung verbunden. In der Abgasreinigung kann das mitgerissene Gas auf dem Fachmann bekannte Weise entfernt werden. So können zur Abgasreinigung z.B. Wäscher eingesetzt werden.

In der hier dargestellten Ausführungsform läuft das strangförmige Produkt 9 im Bereich des ersten Syphons 11 und des zweiten Syphons 13 an dessen Wandung entlang. Im Reaktionsraum 3 ist eine Umlenkrolle 39 aufgenommen, über die das strangförmige Produkt 9 geführt ist. Um zu vermeiden, dass das strangförmige Produkt 9 im Bereich des ersten Syphons 11 und des zweiten Syphons 13 an dessen Wandung entlangläuft, ist es auch möglich, in den Syphons 11, 13 Umlenkrollen vorzusehen, über die strangförmige Produkt 9 geführt wird. Ein Führen entlang der Wandung des Syphons 11, 13 ist möglich, da die im Syphon 11, 13 enthaltene Flüssigkeit 15 als Schmierfilm an der Wandung wirkt.

Insbesondere bei der Halogenierung von Elastomerprofilen ist es vorteilhaft, die Halogenierung bei erhöhter Temperatur durchzuführen, um eine schnelle Reaktion des Halogens mit dem Elastomer zu erreichen. Durch die schnelle Reaktion kann der Reaktionsraum 3 kurz und kompakt gehalten werden. Eine schnelle Halogenierung wird dadurch erreicht, dass z.B. im Elastomerprofil noch vorhandene Wärme genutzt wird, indem die Halogenierung unmittelbar nach der Vulkanisation des Elastomerprofils erfolgt. Auch beim Durchleiten des Elastomerprofils durch die Flüssigkeit 15 im ersten Syphon 11 wird nur ein Teil der Wärme abgegeben, so dass ein noch warmes Elastomerprofil in den Reaktionsraum 3 eintritt.

Alternativ ist es jedoch auch möglich, z.B. mit einem erwärmten Gas im Reaktionsraum 3 zu arbeiten. Die Erwärmung des Gases erfolgt dabei vorzugsweise ebenfalls im Gasumlauf 17. Weiterhin ist es auch möglich, die Dissoziation des Halogens mit einem kalten Plasma zu unterstützen.

## Patentansprüche

1. Vorrichtung zur Exposition eines Wischgummiprofils von Scheibenwischern einem Gas, umfassend einen Reaktionsraum (3), mit einem Einlass (5), durch den das Wischgummiprofil (9) kontinuierlich dem Reaktionsraum (3) zugeführt wird und einem Auslass (7), durch den das Wischgummiprofil (9) aus dem Reaktionsraum (3) austritt, wobei am Einlass (5) und am Auslass (7) jeweils ein mit einer Flüssigkeit (15) gefüllter Syphon (11, 13) ausgebildet ist, durch den das Wischgummiprofil (9) geführt wird, **dadurch gekennzeichnet, dass** der Reaktionsraum (3) ein halogenhaltiges Gas enthält.

2. Vorrichtung gemäß Anspruch 1, **dadurch gekennzeichnet, dass** der Reaktionsraum (3) mit einem Gasumlauf (17) verbunden ist, durch den das im Reaktionsraum (3) enthaltene Gas umgewälzt wird.

3. Vorrichtung gemäß Anspruch 2, **dadurch gekennzeichnet, dass** der Gasumlauf (17) einen Gastrockner umfasst, in dem das umgewälzte Gas getrocknet wird.

4. Vorrichtung gemäß Anspruch 2 oder 3, **dadurch gekennzeichnet, dass** der Gasumlauf (17) eine Vorrichtung (25) zur Analyse der Gaszusammensetzung umfasst.

5. Vorrichtung gemäß einem der Ansprüche 1 bis 4, **dadurch gekennzeichnet, dass** eine Vorrichtung (27) zur Zudosierung von Gas umfasst ist

6. Vorrichtung gemäß Anspruch 5, **dadurch gekennzeichnet, dass** die Vorrichtung (27) zur Zudosierung von Gas mit dem Gasumlauf (17) verbunden ist.

7. Vorrichtung gemäß einem der Ansprüche 1 bis 6, **dadurch gekennzeichnet, dass** auf der dem Reaktionsraum (3) abgewandten Seite der Syphons (11, 13) am Einlass (5) und am Auslass (7) jeweils eine Absaugung (33, 37) angeordnet ist, um verdunstende gashaltige Flüssigkeit aus dem Syphon abzusaugen.

8. Vorrichtung gemäß einem der Ansprüche 1 bis 7, **dadurch gekennzeichnet, dass** die in den Syphons (11,13) enthaltene Flüssigkeit (15) Wasser ist.

9. Verfahren zur Halogenierung von strangförmigen Wischgummiprofilen von Scheibenwischern in einer Vorrichtung gemäß einem der Ansprüche 1 bis 8, bei dem das strangförmige Elastomerprofil (9) durch die Flüssigkeit (15) im Syphon (11) am Einlass (5) dem Reaktionsraum (3) zugeführt wird und durch die Flüssigkeit (15) im Syphon (13) am Auslass (7) aus dem Reaktionsraum (3) abgezogen wird, wobei im Reaktionsraum (3) ein halogenhaltiges Gas enthalten ist.

10. Verfahren gemäß Anspruch 9, **dadurch gekennzeichnet, dass** im Reaktionsraum (3) Atmosphärendruck herrscht.

11. Verfahren gemäß Anspruch 9 oder 10, **dadurch gekennzeichnet, dass** der Halogengehalt des Gases kontinuierlich gemessen wird und verbrauchtes Halogen durch Zugabe eines halogenhaltigen Gases ergänzt wird.

12. Verfahren gemäß einem der Ansprüche 9 bis 11, **dadurch gekennzeichnet, dass** das halogenhaltige Gas Chlor, Fluor oder Brom oder Mischungen daraus und gegebenenfalls Stickstoff enthält.

## Claims

1. Device for exposing a wiper rubber profile of windscreen wipers to a gas, comprising a reaction chamber (3) with an inlet (5), through which the wiper rubber profile (9) is continuously fed into the reaction chamber (3), and an outlet (7), through which the wiper rubber profile (9) leaves the reaction chamber (3), wherein a siphon (11, 13), which is filled with a liquid (15) and through which the wiper rubber profile (9) is passed, is respectively formed at the inlet (5) and at the outlet (7), **characterized in that** the reaction chamber (3) contains a halogen-containing gas.

2. Device according to Claim 1, **characterized in that** the reaction chamber (3) is connected to a gas circulator (17), through which the gas contained in the reaction chamber (3) is circulated.

3. Device according to Claim 2, **characterized in that** the gas circulator (17) comprises a gas dryer, in which the circulated gas is dried.

4. Device according to Claim 2 or 3, **characterized in that** the gas circulator (17) comprises a device (25) for analyzing the gas composition.

5. Device according to one of Claims 1 to 4, **characterized in that** a device (27) for the metered feeding in of gas is comprised.

6. Device according to Claim 5, **characterized in that** the device (27) for the metered feeding in of gas is connected to the gas circulator (17).

7. Device according to one of Claims 1 to 6, **characterized in that** a suction extractor (33, 37) is respectively arranged at the inlet (5) and at the outlet (7) on the side of the siphon (11, 13) facing away from the reaction chamber (3), in order to extract evaporating gas-containing liquid from the siphon.

8. Device according to one of Claims 1 to 7, **characterized in that** the liquid (15) contained in the siphons (11, 13) is water.

9. Method for halogenating wiper rubber profiles in strand form of windscreen wipers in a device according to one of Claims 1 to 8, in which the elastomer profile (9) in strand form is fed into the reaction chamber (3) by the liquid (15) in the siphon (11) at the inlet (5) and is withdrawn from the reaction chamber (3) by the liquid (15) in the siphon (13) at the outlet (7), a halogen-containing gas being contained in the reaction chamber (3).

10. Method according to Claim 9, **characterized in that** atmospheric pressure prevails in the reaction chamber (3).

11. Method according to Claim 9 or 10, **characterized in that** the halogen content of the gas is continuously measured and consumed halogen is made up by adding a halogen-containing gas.

12. Method according to one of Claims 9 to 11, **characterized in that** the halogen-containing gas contains chlorine, fluorine or bromine or mixtures thereof and possibly nitrogen.

## Revendications

1. Dispositif pour l'exposition d'un profilé de caoutchouc d'essuie-glaces à un gaz, comprenant une chambre de réaction (3), munie d'une entrée (5), par laquelle le profilé de caoutchouc d'essuie-glace (9) est introduit en continu dans la chambre de réaction (3) et d'une sortie (7), par laquelle le profilé de caoutchouc d'essuie-glace (9) sort de la chambre de réaction (3), un siphon (11, 13) rempli avec un liquide (15), par lequel le profilé de caoutchouc d'essuie-glace (9) est conduit, étant formé respectivement à l'entrée (5) et à la sortie (7), **caractérisé en ce que** la chambre de réaction (3) contient un gaz halogéné.

2. Dispositif selon la revendication 1, **caractérisé en ce que** la chambre de réaction (3) est raccordée avec un circuit de gaz (17), dans lequel le gaz contenu dans la chambre de réaction (3) est mis en circulation.

3. Dispositif selon la revendication 2, **caractérisé en ce que** le circuit de gaz (17) comprend un séchoir de gaz dans lequel le gaz mis en circulation est séché.

4. Dispositif selon la revendication 2 ou 3, **caractérisé en ce que** le circuit de gaz (17) comprend un dispositif (25) pour l'analyse de la composition du gaz.

5. Dispositif selon l'une quelconque des revendications 1 à 4, **caractérisé en ce qu'**un dispositif (27) pour l'introduction de gaz est compris.

6. Dispositif selon la revendication 5, **caractérisé en ce que** le dispositif (27) pour l'introduction de gaz est raccordé avec le circuit de gaz (17).

7. Dispositif selon l'une quelconque des revendications 1 à 6, **caractérisé en ce qu'**une aspiration (33, 37) est agencée respectivement à l'entrée (5) et à la sortie (7) sur le côté du siphon (11, 13) détourné de la chambre de réaction (3), afin d'aspirer le liquide contenant du gaz évaporé du siphon.

8. Dispositif selon l'une quelconque des revendications 1 à 7, **caractérisé en ce que** le liquide (15) contenu dans les siphons (11, 13) est de l'eau.

9. Procédé d'halogénation de profilés de caoutchouc d'essuie-glaces en forme de cordons dans un dispositif selon l'une quelconque des revendications 1 à 8, selon lequel le profilé élastomère en forme de cordon (9) est introduit par le liquide (15) dans le siphon (11) à l'entrée (5) de la chambre de réaction (3) et soutiré par le liquide (15) dans le siphon (13) à la sortie (7) de la chambre de réaction (3), un gaz halogéné étant contenu dans la chambre de réaction (3).

10. Procédé selon la revendication 9, **caractérisé en ce que** la pression atmosphérique règne dans la chambre de réaction (3).

11. Procédé selon la revendication 9 ou 10, **caractérisé en ce que** la teneur en halogène du gaz est mesurée en continu et l'halogène usagé est remplacé par ajout d'un gaz halogéné.

12. Procédé selon l'une quelconque des revendications 9 à 11, **caractérisé en ce que** le gaz halogéné contient du chlore, du fluor ou du brome ou leurs mélanges et éventuellement de l'azote.
